# EUROPEAN PATENT APPLICATION

(11) **EP 4 408 056 A1**
(43) Date of publication of application: **31.07.2024**
(21) Application number: 22882829.9
(22) Date of filing: 18.10.2022
(51) Int. Cl.: H04W 24/02

(54) **COMMUNICATION METHOD, COMMUNICATION APPARATUS, AND COMPUTER STORAGE MEDIUM**

(30) Priority: 19.10.2021 CN 202111217406
(71) Applicant: Huawei Technologies Co., Ltd., Shenzhen, Guangdong 518129 (CN)
(72) Inventor: WANG, Rui, Shenzhen, Guangdong 518129 (CN); SUN, Lin, Shenzhen, Guangdong 518129 (CN)
(74) Representative: Pfenning, Meinig & Partner mbB
(86) International application number: PCT/CN2022/125828
(87) International publication number: WO 2023/066223

(57) **Abstract**

This application provides a communication method, a communication apparatus, and a computer storage medium. The communication method includes: A first access network device obtains voice service indication information; sends a first paging message including the voice service indication information to a first terminal; receiving, from the first terminal, a request message used to request to establish or resume an RRC connection, where the request message includes indication information, the indication information indicates that the RRC connection is established or resumed based on a voice service; and determining, based on the indication information, to enable the first terminal to access a second access network, where the first access network device is located in a first access network using a first radio access technology, the second access network uses a second radio access technology, and the second access network supports the first terminal in performing the voice service. According to the communication method, the first terminal can be quickly handed over or redirected to the second access network to perform the voice service, thereby reducing a communication delay and improving communication quality.

## Description

### TECHNICAL FIELD

This application relates to the field of communication technologies, and in particular, to a communication method, a communication apparatus, and a computer storage medium.

### BACKGROUND

In a new radio (new radio, NR) communication system, after a terminal enters a connected state, if the terminal needs to perform a voice service, an NR base station may trigger the terminal to be handed over or redirected to a long term evolution (long term evolution, LTE) cell, so that the terminal can perform a voice service using an LTE cell. This process may be referred to as evolved packet system fallback (evolved packet system fallback, EPS fallback).

However, the foregoing EPS fallback process is applicable only to a terminal in a connected state. If the terminal is in an idle state or an inactive state, the terminal may perform the EPS fallback process only after entering the connected state. Therefore, an overall delay is long, and communication quality of the terminal is affected.

### SUMMARY

Embodiments of this application provide a communication method, a communication apparatus, and a computer storage medium, to improve communication quality of a voice service.

According to a first aspect, this application provides a communication method, including: A first access network device obtains voice service indication information. The first access network device sends a first paging message to a first terminal, where the first paging message includes the voice service indication information, the first access network device is located in a first access network using a first radio access technology. The first access network device receives a request message from the first terminal, where the request message is used to request to establish or resume a radio resource control (radio resource control, RRC) connection, the request message includes indication information, and the indication information indicates that the RRC connection is established or resumed based on a voice service. The first access network device determines, based on the indication information, to enable the first terminal to access a second access network using a second radio access technology, where the second access network supports the first terminal in performing the voice service.

Optionally, the first terminal is in a non-connected state, including a third state or an idle state.

In a possible implementation of the first aspect, that the first access network device determines, based on the indication information, to enable the first terminal to access a second access network using a second radio access technology includes: The first access network device determines, based on the indication information, to hand over or redirect the first terminal to a second access network device, where the second access network device is located in the second access network.

In a possible implementation of the first aspect, that the first access network device determines, based on the indication information, to enable the first terminal to access a second access network using a second radio access technology includes: The first access network device configures a measurement parameter for the first terminal based on the indication information, where the measurement parameter is used to measure a cell managed by one or more access network devices in the second access network.

In a possible implementation of the first aspect, that the first access network device determines, based on the indication information, to enable the first terminal to access a second access network using a second radio access technology includes: The first access network device determines a target base station or a target cell in the second access network for the first terminal based on the indication information. The method further includes: The first access network device sends, to the first terminal, indication information indicating the target base station or the target cell.

In a possible implementation of the first aspect, that a first access network device obtains voice service indication information includes: The first access network device receives a second paging message from a core network, where the second paging message includes the voice service indication information, and the core network and the first access network device use a same radio access technology.

In a possible implementation of the first aspect, that a first access network device obtains voice service indication information includes: The first access network device receives, from a core network, downlink data transmitted to the first terminal or signaling related to the first terminal, where the downlink data or the signaling is related to the voice service. The first access network device determines the voice service indication information based on the downlink data or the signaling, where the core network and the first access network device use a same radio access technology. In this implementation, the first terminal is in a third state. Optionally, the method further includes: The first access network device sends a second paging message to a neighboring access network device, where the second paging message includes the voice service indication information.

According to a second aspect, this application provides a communication method, including: A first terminal receives a first paging message from a first access network device, where the first paging message includes voice service indication information, and the first access network device is located in a first access network using a first radio access technology. The first terminal sends a request message to the first access network device, where the request message is used to request to establish or resume an RRC connection, the request message includes indication information, and the indication information indicates that the RRC connection is established or resumed based on a voice service.

In a possible implementation of the second aspect, the voice service indication information is determined based on a second paging message received by the first access network device from a core network, the second paging message includes the voice service indication information, and the core network and the first access network device use a same radio access technology.

In a possible implementation of the second aspect, the voice service indication information is determined based on downlink data or signaling related to the first terminal that is received by the first access network device from a core network, the downlink data is transmitted to the first terminal, the downlink data or the signaling is related to the voice service, and the core network and the first access network device use a same radio access technology.

In a possible implementation of the second aspect, the method further includes: An access stratum of the first terminal ignores an RRC connection establishment cause value or an RRC connection resume cause value provided by a non-access stratum of the terminal, and uses the indication information as the RRC connection establishment cause value or the RRC connection resume cause value.

In a possible implementation of the second aspect, the method further includes: The first terminal receives a measurement parameter from the first access network device, where the measurement parameter is used to measure a cell managed by one or more access network devices in a second access network.

In a possible implementation of the second aspect, the method further includes: The first terminal receives, from the first access network device, indication information indicating a target base station or a target cell located in the second access network.

The second access network uses a second radio access technology, and supports the first terminal in performing the voice service. The terminal may access the second access network to perform the voice service.

In a possible implementation of the first aspect or the second aspect, the first paging message further includes an identifier of one or more terminals, an identifier of the first terminal corresponds to the voice service indication information, and the first terminal belongs to the one or more terminals.

In a possible implementation of the first aspect or the second aspect, the first access network is a new radio network, and the second access network is a long term evolution network.

In a possible implementation of the first aspect or the second aspect, the core network is a 5G core network.

According to the communication method according to the first aspect or the second aspect, the terminal sends, to the access network device, an RRC connection establishment/resume request message including a voice service cause value, so that the access network device can learn that the terminal needs to perform the voice service. If the access network device does not support the voice service, the access network device may determine to enable the terminal to access another target access network that supports the voice service, and perform measurement configuration for the terminal or determine a candidate access network device/cell/frequency in the target access network for the terminal, and the access network device can send the measurement configuration to the terminal or indicate the terminal to access the target access network without waiting for a quality of service flow (Quality of Service flow, QoS flow) establishment request sent by the core network, so that the terminal can perform the voice service in the target access network in time, thereby reducing a delay of performing the voice service by the terminal, and improving communication quality.

According to a third aspect, this application provides a communication method, including: A first terminal receives a first paging message from a first access network device, where the first paging message includes first indication information, and the first indication information indicates the first terminal to access a second access network. The first terminal determines a target cell in the second access network based on the first indication information. The first terminal accesses a second access network device, where the first access network device is located in a first access network using a first radio access technology, the second access network uses a second radio access technology, and the second access network supports the first terminal in performing a voice service.

In a possible implementation of the third aspect, the first indication information is determined based on a second paging message received by the first access network device from a core network, the second paging message includes voice service indication information, and the core network and the first access network device use a same radio access technology.

In a possible implementation of the third aspect, the first indication information is determined based on downlink data or signaling related to the first terminal that is received by the first access network device from a core network, the downlink data is transmitted to the first terminal, the downlink data or the signaling is related to the voice service, and the core network and the first access network device use a same radio access technology.

In a possible implementation of the third aspect, that the first terminal accesses a second access network device includes: The first terminal sends an RRC connection establishment request message to the second access network device to which the target cell belongs. Optionally, the RRC connection establishment request message includes second indication information, and the second indication information indicates that an RRC connection is established based on the voice service. Optionally, an access stratum of the first terminal ignores an RRC connection establishment cause value provided by a non-access stratum of the first terminal, and uses the second indication information as the RRC connection establishment cause value.

In a possible implementation of the third aspect, the method further includes: receiving information about a candidate frequency or information about a candidate cell from the first access network device. Therefore, the first terminal may select the target cell from the candidate cell or from a cell corresponding to the candidate frequency for access.

In a possible implementation of the third aspect, the method further includes: The first terminal receives third indication information from the first access network device, where the third indication information indicates that the first access network device does not support the voice service. The first terminal determines, based on the first indication information and the third indication information, to access the second access network device, where the first indication information is the voice service indication information. Optionally, the third indication information is included in system information broadcast by the first access network device.

According to a fourth aspect, this application provides a communication method, including: A first access network device determines a first paging message, where the first paging message includes first indication information, and the first indication information indicates a first terminal to access a second access network. The first access network device sends the first paging message to the first terminal, where the first paging message is used by the first terminal to determine to access a target cell in the second access network, the first access network device is located in a first access network using a first radio access technology, the second access network uses a second radio access technology, and the second access network supports the first terminal in performing a voice service.

In a possible implementation of the fourth aspect, that a first access network device determines a first paging message includes: The first access network device receives a second paging message from a core network, where the second paging message includes voice service indication information. The first access network device determines the first paging message based on the second paging message, where the core network and the first access network device use a same radio access technology.

In a possible implementation of the fourth aspect, that a first access network device determines a first paging message includes: The first access network device receives downlink data or signaling related to the first terminal from a core network, where the downlink data is transmitted to the first terminal, and the downlink data or the signaling is related to the voice service. The first access network device determines the first paging message based on the downlink data or the signaling, where the core network and the first access network device use a same radio access technology.

In a possible implementation of the fourth aspect, the method further includes: The first access network device sends information about a candidate frequency or information about a candidate cell to the first terminal. Optionally, the information about the candidate frequency or the information about the candidate cell may be sent by using system information or an RRC connection release message.

In a possible implementation of the fourth aspect, the method further includes: The first access network device sends third indication information to the first terminal, where the third indication information indicates that the first access network device does not support the voice service. Optionally, the third indication information is included in system information broadcast by the first access network device.

In a possible implementation of the third aspect or the fourth aspect, the first indication information is the voice service indication information, or the first paging message further includes the voice service indication information.

In a possible implementation of the third aspect or the fourth aspect, the first paging message further includes an identifier of one or more terminals, an identifier of the first terminal corresponds to the voice service indication information, and the first terminal belongs to the one or more terminals.

In a possible implementation of the third aspect or the fourth aspect, the first access network is a new radio network, and the second access network is a long term evolution network.

In a possible implementation of the third aspect or the fourth aspect, the core network is a 5G core network.

According to the communication method according to the third aspect or the fourth aspect, after receiving, from a currently camped access network device, a paging message including the voice service indication information, the terminal can learn that the access network device indicates the terminal to access a target access network that supports the terminal in performing the voice service. Therefore, the terminal can directly initiate an access process to a base station in the target access network without accessing the camped access network device or registering with the core network connected to the camped access network device, so that the terminal can perform the voice service in the target access network in time, thereby reducing a delay of performing the voice service by the UE, and improving communication quality.

According to a fifth aspect, this application further provides a communication apparatus, including a unit, a module, or a means (means) configured to perform the steps in the first aspect to the fourth aspect. The communication apparatus may be a network device or an apparatus used in the network device. The network device may be a base station or a device that has some functions of the base station.

According to a sixth aspect, this application further provides a communication apparatus, including a processor and an interface circuit. The processor is configured to: communicate with another apparatus via the interface circuit, and perform the methods according to the first aspect to the fourth aspect. There are one or more processors.

According to a seventh aspect, this application further provides a communication apparatus, including a processor, configured to invoke a program stored in a memory, to perform the methods according to the first aspect to the fourth aspect. The memory may be located inside or outside the apparatus. In addition, there may be one or more processors.

According to an eighth aspect, this application further provides a computer program product. When a program is invoked by a processor, the method according to any one of the foregoing aspects is performed.

In addition, a computer-readable storage medium is provided, and includes the foregoing program.

According to a ninth aspect, this application provides a communication system, including a first access network device and a second access network device. The first access network device is configured to perform the method according to the first aspect, or the first access network device is configured to perform the method according to the fourth aspect.

### BRIEF DESCRIPTION OF DRAWINGS

FIG. 1 is a diagram of an application scenario according to an embodiment of this application;
FIG. 2 is a schematic flowchart of EPS fallback according to this application;
FIG. 3 is a schematic flowchart of a communication method according to this application;
FIG. 4 is a schematic signaling flowchart of a communication method according to this application;
FIG. 5 is a schematic flowchart of a communication method according to this application;
FIG. 6 is a schematic signaling flowchart of a communication method according to this application;
FIG. 7 is a diagram of a communication apparatus 700 according to an embodiment of this application;
FIG. 8 is a diagram of a network device 800 according to an embodiment of this application; and
FIG. 9 is a diagram of a terminal 900 according to an embodiment of this application.

### DESCRIPTION OF EMBODIMENTS

Technologies described in embodiments of this application may be applied to a plurality of communication systems such as a long term evolution (long term evolution, LTE) wireless communication system and a 5th generation (5th generation, 5G) mobile communication system, for example, a new radio (new radio, NR) system, or another next generation (next generation, NG) communication system or a new communication system. This is not limited in this application.

In this application, a terminal may be various devices that provide voice and/or data connectivity for a user, or may be referred to as a terminal device, user equipment (user equipment, UE), a mobile station, a mobile terminal, or the like. The terminal may be widely used in various scenarios, such as device-to-device (device-to-device, D2D), vehicle-to-everything (vehicle-to-everything, V2X) communication, machine-type communication (machine-type communication, MTC), internet of things (internet of things, IOT), virtual reality, augmented reality, industrial control, autonomous driving, remote medical, a smart grid, smart furniture, smart office, smart wearable, smart transportation, and a smart city. The terminal may be a mobile phone, a tablet computer, a computer with a wireless transceiver function, a wearable device, an aerospace device, or the like. In embodiments of this application, a chip used in the foregoing device may also be referred to as the terminal. The following uses UE as the terminal for description.

In this application, a network device may be an access network device such as a base station. For example, the network device may be an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, or a base station in a future mobile communication system; or may be a module or a unit that completes some functions of the base station, for example, may be a central unit (central unit, CU) or a distributed unit (distributed unit, DU). The CU herein completes functions of the radio resource control protocol and the packet data convergence protocol (packet data convergence protocol, PDCP) of the base station, and may further complete functions of the service data adaptation protocol (service data adaptation protocol, SDAP). The DU completes functions of a radio link control layer and a medium access control (medium access control, MAC) layer of the base station, and may further complete functions of a part or all of a physical layer. For specific descriptions of the foregoing protocol layers, refer to technical specifications related to the 3rd generation partnership project (3rd Generation Partnership Project, 3GPP). The network device may be a macro base station, a micro base station, an indoor base station, a relay node, a master node, or the like. A specific technology and a specific device form that are used by the network device are not limited in embodiments of this application. The following uses the base station as the network device for description.

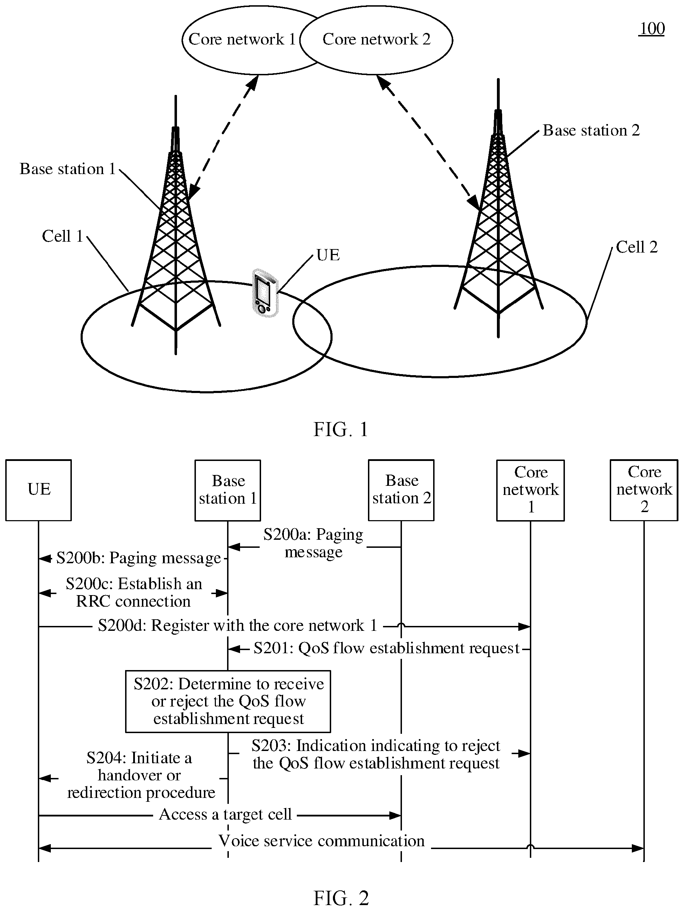

FIG. 1 is a diagram of an application scenario according to an embodiment of this application;
As shown in FIG. 1, a base station 1 and a base station 2 are base stations that use different radio access technologies (radio access technology, RAT), that is, the base station 1 and the base station 2 have different RATs. The base station 1 is connected to a core network 1, the base station 2 is connected to a core network 2, and the base station 1 and the base station 2 may directly communicate with each other, or may indirectly communicate with each other via another network device. Each base station manages one or more cells. A coverage area of each cell may cover one or more terminals. The terminal accesses a network device by using the cell and obtains a communication service. In FIG. 1, the base station 1 manages a cell 1, the base station 2 manages a cell 2, and UE accesses the cell 1.

It is assumed that the base station 1 uses an NR radio access technology, that is, the base station 1 is an NR base station, and the core network 1 is a 5G core (5G Core, 5GC) network; and the base station 2 uses an LTE radio access technology, that is, the base station 2 is an LTE base station, and the core network 2 is an evolved packet core (Evolved Packet Core, EPC) network. The UE accesses the cell 1 to establish a connection to the 5GC. The 5GC can provide a voice service for UE in a connected state through evolved packet system (evolved packet system, EPS) fallback (fallback). An implementation of the EPS fallback is shown in FIG. 2.

S201: The core network 1 sends a QoS flow establishment request to the base station 1, where the QoS flow establishment request is used to request to establish a QoS flow used to transmit voice service data.

Specifically, when the UE performs calling/is called, the core network 1 identifies that the UE needs to perform data transmission of a voice service; and may initiate a session update request (protocol data unit session modification, PDU session modification) procedure, and send the QoS flow establishment request to the base station 1 in the procedure.

S202: The base station 1 determines to receive or reject the QoS flow establishment request.

Specifically, after receiving the QoS flow establishment request, the base station 1 may determine, based on whether the base station 1 supports the voice service and some other known network factors such as a network deployment status, a core network capability, and an operator policy, to receive or reject the QoS flow establishment request.

If the base station 1 determines to reject the QoS establishment request, the base station 1 performs S203 and S204, to complete the EPS fallback.

S203: The base station 1 sends, to the core network 1, an indication indicating to reject the QoS flow establishment request.

S204: The base station 1 initiates a handover or redirection procedure to the UE, so that the UE accesses an LTE cell to perform the voice service.

It is assumed that the base station 1 determines that the UE can be handed over or redirected to a cell managed by the base station 2, that is, the base station 2 is used as a target base station of handover or redirection, and the cell managed by the base station 2 is used as a target cell of handover or redirection.

If the base station 1 initiates a handover procedure, the base station 1 may use a handover command sent to the UE and a handover preparation request sent to the base station 2 to carry EPS fallback indication information, to indicate to hand over the UE to the cell of the base station 2. If the handover of the UE fails, the UE attempts to select an LTE cell for access, and performs RRC reestablishment if no proper LTE cell is found. When the UE accesses the LTE cell, an RRC connection establishment request message may carry a cause value indicating that an RRC connection is established based on the voice service performed by the UE.

If the base station 1 initiates a redirection procedure, the base station 1 may use an RRC release message sent to the UE to carry EPS fallback indication information, to indicate to redirect the UE to the cell of the base station 2. Further, the UE may send an RRC connection establishment request to the cell of the base station 2, for example, the cell 2, where the RRC connection establishment request may include a cause value indicating that an RRC connection is established based on the voice service performed by the UE. After the UE is handed over or redirected to a target cell, for example, the cell 2, the UE may complete a connection establishment process of the voice service with the core network 2, and transfers the voice service of the UE to an LTE network for processing.

The EPS fallback is implemented when the UE is in the connected state. If the UE is in a non-connected state, the UE can fall back to the LTE cell based on the handover or redirection procedure to perform the voice service only after entering the connected state. As shown in FIG. 2, before S201, a process in which the UE enters the connected state may include S200a to S200d:
S200a: The core network 1 sends a paging message to the base station 1.
S200b: The base station 1 sends the paging message to the UE.
S200c: The UE establishes an RRC connection to the base station 1.
S200d: The UE registers with the core network 1.

In a registration process, the UE completes procedures such as security activation, and establishes, with the core network 1, a QoS flow for carrying control signaling of the voice service.

The control signaling may be session initiation protocol (session initiation protocol, SIP) signaling, for example, signaling used for dialing ringing. The UE may send or receive the SIP signaling via a base station. Based on the SIP signaling, the UE may perform calling by using an NR cell, for example, the cell 1, to initiate the voice service, or may be called by using an NR cell.

It can be learned that, compared with the UE in the connected state, the UE in the non-connected state has a significantly longer delay of completing the EPS fallback, higher signaling overheads, and lower efficiency, thereby affecting communication quality of the voice service.

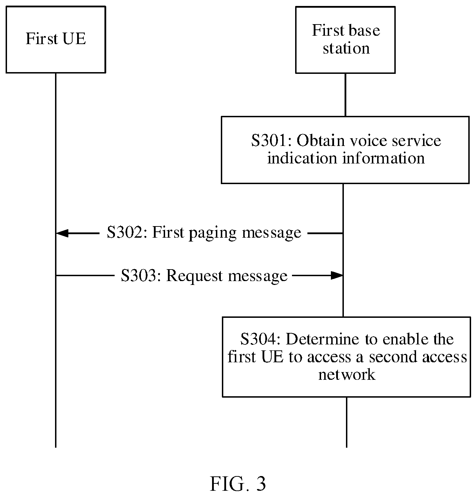

To reduce a delay of completing the EPS fallback by the UE in the non-connected state, this application provides a communication method. The communication method may be applied to the application scenario shown in FIG. 1. FIG. 3 is a schematic flowchart of a communication method according to this application. The method includes the following steps.

S301: A first base station obtains voice service indication information.

The first base station is located in an access network (referred to as a "first access network" below) using a first radio access technology. For example, the first base station is located in an NR network, and the first base station is an NR base station, for example, a gNB.

The voice service indication information may also be referred to as a voice service type indication, indicating a voice service.

S302: The first base station sends a first paging message to first UE, where the first paging message includes the voice service indication information.

The first base station may initiate a paging process to one or more UEs in a non-connected state, and send the first paging message to each UE, where the first UE is one UE that receives the first paging message. The non-connected state in this application includes an idle state or a third state. The third state may also be referred to as an inactive state (inactive state). Specifically, in the third state, an air interface connection between the UE and a serving base station is broken, but the UE retains various types of configuration information configured by the serving base station for the UE, the serving base station retains a context of the UE, and the serving base station retains a connection established between the serving base station and a core network for the UE. The serving base station may also be referred to as an anchor (anchor) base station of the UE in the third state.

When the first UE is in the third state, the first base station may be used as an anchor base station of the first UE. In addition, when the first UE is in the idle state, the first base station may be used as a camped base station of the first UE. In this application, both the anchor base station and the camped base station may be referred to as serving base stations.

Optionally, the first paging message includes an information element (information element, IE). The information element includes the voice service indication information. The information element may be a newly designed information element or reuse an information element in an existing paging message. This is not specifically limited in this application.

Optionally, the first paging message further includes identifiers of the one or more UEs, and an identifier of each UE may correspond to voice service indication information or a null value. If an identifier of one UE corresponds to voice service indication information, it indicates that the UE is paged because a voice service arrives at the UE. If an identifier of one UE corresponds to a null value, it indicates that the UE is paged because of a reason other than a voice service. The null value means that a bit that carries the voice service indication information does not appear, or is a preset value (for example, 0 or null).

Optionally, the first base station obtains the voice service indication information based on voice service related information from the core network. The core network and the first base station have a communication interface, and use a same radio access technology. For example, the first base station is a gNB, the core network is a 5GC, and the gNB communicates with the 5GC through an NG interface.

For example, in an implementation, the voice service related information is a paging message including the voice service indication information. Specifically, the first base station receives a second paging message from the core network, where the second paging message includes the voice service indication information. Therefore, the first base station learns that the core network prepares to initiate the voice service to the UE. Specifically, the second paging message may include an information element, and the information element includes the voice service indication information.

Optionally, the second paging message further includes identifiers of the one or more UEs, and an identifier of each UE may correspond to voice service indication information or a null value. To be specific, a correspondence between the voice service indication information and the identifier of the UE that are included in the second paging message is the same as a correspondence between the voice service indication information and the identifier of the UE that are included in the first paging message. The first base station may include, in the first paging message, identifiers of some or all UEs and corresponding voice service indication information in the received second paging message. It may be understood that the second paging message may further include an identifier of another UE, that is, the identifier of the UE included in the first paging message may be identifiers of some UEs in the second paging message. The first base station may page, by using the first paging message, some UEs indicated by the core network by using the second paging message, and page, by using one or more other paging messages, other UEs indicated by the core network by using the second paging message.

It may be understood that the voice service indication information in the first paging message and the voice service indication information in the second paging message may have different representation manners, for example, are included in different information elements, and/or use different quantities of bits. Any first paging message and any second paging message that each include indication information indicating that the UE is paged based on the voice service fall within the protection scope of this application.

For another example, in an implementation, the voice service related information is downlink data related to the voice service. Specifically, the first base station receives, from the core network, downlink data transmitted to the terminal, where the downlink data is related to the voice service; and determines the voice service indication information based on the downlink data.

Specifically, when the first UE is in the third state, the first base station is an anchor base station of the first UE. In this scenario, the core network may not send the second paging message to the first base station, but directly send the downlink data to the first UE via the first base station. In this case, the first base station may determine whether the downlink data is related to the voice service. If the first base station determines that the downlink data is related to the voice service, the first base station may generate a paging message (that is, the first paging message) that carries the voice service indication information, and send the paging message to the first UE.

For another example, in an implementation, the voice service related information is signaling related to the voice service. Specifically, the first base station receives, from the core network, signaling related to the terminal, where the signaling is related to the voice service; and determines the voice service indication information based on the signaling. For example, the core network sends the signaling to the first base station, to request to establish a QoS flow of the voice service of the first UE, or to request to establish or modify a PDU session of the voice service.

In this implementation, the first base station may further send the second paging message to a neighboring base station located in a same location area, where the second paging message includes the voice service indication information. The location area may be a radio access network based notification area (Radio access network based notification area, RAN based notification area).

S303: The first UE sends a request message to the first base station based on the first paging message, where the request message is used to request to establish or resume an RRC connection, the request message includes indication information, and the indication information indicates that the RRC connection is established or resumed based on the voice service.

The voice service is indicated by the voice service indication information.

The first UE is one of the one or more UEs that receive the first paging message. After receiving the first paging message, the first UE may determine whether the first paging message includes an identifier of the first UE. When the first UE determines that the first paging message includes the identifier of the first UE, that is, one UE identifier in the first paging message matches the identifier of the first UE, the first UE determines that the first UE is paged or called, and the first UE determines that the first UE needs to enter an RRC connected state, to perform a paged service. In addition, if the voice service indication information included in the first paging message corresponds to the identifier of the first UE, the first UE may determine that the paged service is the voice service.

Optionally, when the first UE is in the idle state, the first UE sends an RRC connection establishment request message to the first base station, where the RRC connection establishment request message includes the indication information.

Optionally, when the first UE is in the third state, the first UE sends an RRC connection resume request message to the first base station, where the RRC connection resume request message includes the indication information.

In an implementation, the indication information is an RRC connection establishment/resume cause value in the RRC connection establishment/resume request message. The RRC connection establishment/resume cause value indicates a cause of RRC connection establishment/resume initiated by the UE, and different RRC connection establishment/resume causes may be represented in different manners. For example, "mt-access" indicates that the RRC connection establishment/resume cause is that the UE is called, and "mo-VoiceCall" indicates that the RRC connection establishment/resume cause is that the UE is to perform the voice service.

After an access stratum (access stratum, AS) of the UE in the third state receives the first paging message, if the UE identifier included in the first paging message matches the identifier of the first UE that is provided by a non-access stratum (non-access stratum, NAS), the AS notifies the NAS, and the NAS provides the RRC connection establishment/resume cause value. Therefore, the first UE may include the cause value in the RRC connection establishment/resume request message. However, in this application, the AS may ignore the cause value provided by the NAS, and replace the cause value with the foregoing indication information.

S304: The first base station determines, based on the indication information in the request message, to enable the first UE to access an access network (referred to as a "second access network" below) using a second radio access technology, where the second access network supports the first terminal in performing the voice service.

The second access network and the first access network use different radio access technologies, that is, RATs. When the first base station is an NR base station, the second access network may be an LTE network, and the first UE may perform the voice service in the LTE network.

It may be understood that "accessing a second access network" is accessing a base station in the second access network, or accessing a cell managed by a base station in the second access network. A base station to be accessed by the UE may be referred to as a target base station, and a cell to be accessed by the UE may be referred to as a target cell.

Specifically, the first base station may determine, based on the indication information, that the first UE is to perform the voice service. If a capability of the first base station is not suitable for the UE to perform the voice service, for example, the first base station does not support the voice service, and another network factor such as a network deployment status is considered, the first base station may determine to hand over or redirect the first UE to the target base station in the second access network.

To implement handover or redirection of the first UE, in an implementation, the first base station may determine, based on the indication information, that the UE is to perform the voice service, to configure a measurement parameter for the first UE, where the measurement parameter is used by the first UE to measure a cell managed by one or more base stations in the second access network. After the first UE completes core network registration (as shown in step S203), the first base station may send the measurement parameter to the first UE without waiting for the core network to send the QoS flow establishment request to the first base station (as shown in step S201). Correspondingly, the first base station does not need to send a response message for the request to the core network (as shown in step S202). The first UE may measure signal quality of each cell based on the measurement parameter, and determine a target base station based on a measurement result, or send a measurement result to the first base station, and the first base station determines the target base station, so that the UE can complete handover or redirection to the target base station. Because the first base station performs measurement configuration for the first UE in advance, a delay of accessing the target base station by the first UE can be reduced, and communication quality of performing the voice service by the first UE can be improved.

In another implementation, the first base station may determine, based on the indication information, that the first UE is to perform the voice service, to determine, for the first UE, a target base station/cell or a frequency that can be accessed in the second access network, and notify the first UE. For example, the first base station sends, to the first UE, indication information indicating the target base station/cell or the frequency that can be accessed, so that the first UE can complete handover or redirection to the target base station. When the first base station directly determines, for the first UE, the target base station/cell or the frequency that can be accessed, a delay of accessing the target base station by the first UE is reduced, and communication quality of performing the voice service by the first UE is improved.

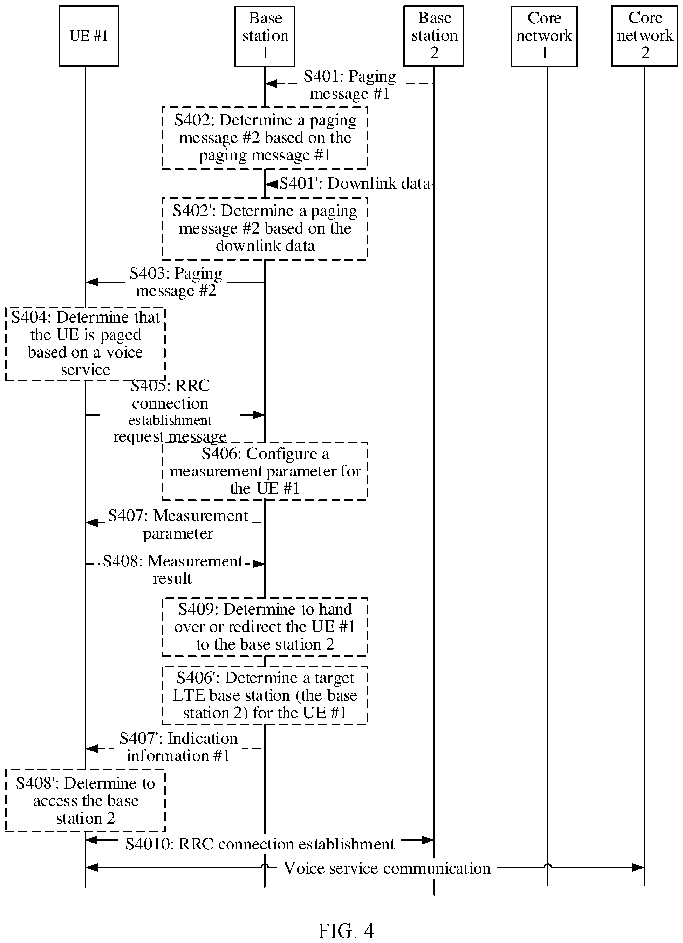

In the embodiment shown in FIG. 4, the communication method provided in this application is further described based on the embodiment shown in FIG. 3. Content described in the embodiment shown in FIG. 3 is not described again. In the embodiment shown in FIG. 4, the first base station is a base station 1, the second base station is a base station 2, and the first UE is UE #1. When the embodiment shown in FIG. 4 is applied to the application scenario shown in FIG. 1, the base station 1 is an NR base station, the core network 1 is a 5GC, the base station 2 is an LTE base station, and the core network 2 is an EPC. As shown in FIG. 4, the method includes the following steps.

S401: The core network 1 sends a paging message #1 to the base station 1.

The paging message #1 includes identifiers of one or more UEs, and identifiers of some or all UEs respectively correspond to voice service indication information. For example, an identifier of the UE #1 corresponds to voice service indication information, and the voice service indication information indicates that a reason why the UE #1 is paged is that a voice service arrives.

S402: The base station 1 determines a paging message #2 based on the paging message #1.

The paging message #2 includes identifiers of one or more UEs and voice service indication information corresponding to identifiers of some or all UEs.

For descriptions of the paging message #1 and the paging message #2, refer to the descriptions of the first paging message and the second paging message in the embodiment in FIG. 3.

When paged UE, for example, the UE #1, is in a third state, in another implementation, S401 and S402 may be replaced with S401' and S402'. S401' includes: The core network 1 sends, to the base station 1, downlink data transmitted to the UE #1.

S402' includes: The base station 1 determines that the downlink data is related to a voice service, and generates a paging message #2.

S403: The base station 1 sends the paging message #2 to the one or more UEs.

It is assumed that the UE #1 in an idle state receives the paging message #2.

S404: The UE #1 determines, based on the paging message #2, that the UE #1 is paged based on the voice service.

S405: When the UE #1 is in the idle state, the UE #1 sends an RRC connection establishment request message to the base station 1, where an RRC connection establishment cause value included in the RRC connection establishment request message is the voice service.

When the UE #1 is in the third state, the RRC connection establishment request message is replaced with an RRC connection resume request message.

For detailed descriptions of S404 and S405, refer to the foregoing content of S303. Details are not described again.

S406: The base station 1 configures a measurement parameter for the UE #1 based on the RRC connection establishment request message.

Specifically, if the base station 1 determines, based on the RRC connection establishment cause value, that the UE #1 is to perform the voice service, but a capability of the base station 1 does not support the UE #1 in performing the voice service, the base station 1 determines that EPS fallback needs to be triggered for the UE #1, and enables the UE #1 to access an LTE cell. In this case, the LTE cell provides voice service communication for the UE #1.

S407: The base station 1 sends the configured measurement parameter to the UE #1.

S408: The UE #1 performs neighboring cell measurement based on the measurement parameter, and reports a measurement result to the base station #1.

S409: The base station 1 determines, based on the measurement result, to hand over or redirect the UE #1 to the base station 2.

S4010: The UE #1 and the base station 2 complete an RRC connection establishment process.

After accessing the base station 2, the UE #1 may perform voice service communication with the core network 2 via the base station 2.

Optionally, S406 to S409 may be replaced with S406' to S408'.

S406': The base station 1 determines, based on the RRC connection establishment request message, a to-be-accessed target LTE base station for the UE #1, for example, the base station 2.

Optionally, the base station 1 determines a to-be-accessed LTE cell or an available frequency for the UE #1.

S407': The base station 1 sends, to the UE #1, indication information #1 indicating the target LTE base station.

S408': The UE #1 determines, based on the indication information #1, to access the base station 2.

For detailed descriptions of S406 to S409 and S406' to S408', refer to related content of S304.

According to the communication methods provided in the embodiments in FIG. 3 and FIG. 4, the UE sends, to the serving base station, the RRC connection establishment/resume request message including a voice service cause value, so that the serving base station can learn that the UE needs to perform the voice service. If the base station does not support the voice service, the base station may determine to enable the UE to access another target access network that supports the voice service, and perform measurement configuration for the UE or determine a candidate base station/cell/frequency in the target access network for the UE, and the base station can send the measurement configuration to the UE or indicate the UE to access the target access network without waiting for the QoS flow establishment request sent by the core network, so that the UE can perform the voice service in the target access network in time, thereby reducing a delay of performing the voice service by the UE, and improving communication quality.

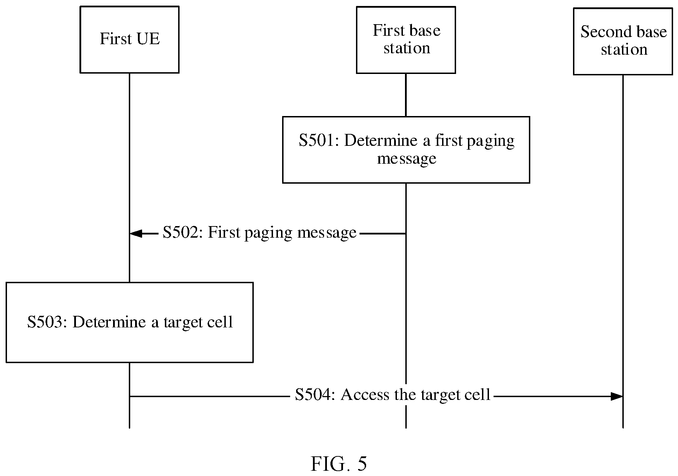

FIG. 5 is a schematic flowchart of another communication method according to this application. The method includes the following steps.

S501: A first base station determines a first paging message, where the first paging message includes first indication information, and the first indication information indicates UE to access a second access network using a second radio access technology.

The first base station is located in a first access network using a first radio access technology. For example, the first base station is located in an NR network, and the first base station is a gNB.

The second access network and the first access network use different radio access technologies, that is, RATs. When the first base station is an NR base station, the second access network may be an LTE network, and the first UE may perform a voice service in the LTE network.

Optionally, the first base station determines, based on voice service related information from a core network, that the terminal is paged based on the voice service. In an implementation, the voice service related information is a second paging message including voice service indication information. In another implementation, the voice service related information is downlink data or signaling related to the voice service. For detailed descriptions of the voice service related information from the core network, refer to related content in the embodiments in FIG. 3 and FIG. 4.

Optionally, when the first base station learns that the first UE is paged based on the voice service, the first base station may determine, based on whether the first base station supports the voice service and another network factor, for example, a network deployment status including whether a cell in the first access network and a target cell in the second access network have same coverage, a core network capability, or an operator policy, that the first UE needs to fall back to the second access network, that is, enable the first UE to access the target base station in the second access network. Therefore, the first base station uses a paging message sent to the first UE to carry the first indication information.

When the first base station is an NR base station and the second access network is an LTE network, the first indication information may be referred to as an EPS fallback indication, indicating the first UE to access an LTE cell to perform voice service paging.

S503: The first base station sends the first paging message to the first UE.

In an implementation, the first indication information is an explicit indication, that is, the first UE is directly indicated to access the second access network to perform the voice service. Optionally, the first paging message further includes voice service indication information. For detailed descriptions of the voice service indication information, refer to related content in the embodiments in FIG. 3 and FIG. 4.

In another implementation, the first indication information is an implicit indication. For example, the first indication information is the voice service indication information. The method may further include: The first UE receives third indication information from the first base station, where the third indication information may include any one or more of the following content: an explicit indication indicating the first UE to access the second access network, an indication indicating that the first access network does not support the voice service, information about a frequency/cell in the second access network in which the first base station recommends the first UE to perform the voice service, or the like. The third indication information is included in system information broadcast by the first base station. Therefore, the first UE may determine, based on the voice service indication information carried in the second paging message and the third indication information included in the system information of a currently camped cell, that the first base station indicates the first UE to access the second access network to perform the voice service.

Optionally, the first paging message further includes identifiers of one or more UEs, and an identifier of the first UE corresponds to the first indication information. When the first indication information is the voice service indication information, for a design of an information element in the first paging message, refer to related content of the first paging message in the embodiment shown in FIG. 3.

S504: The first UE determines the target cell in the second access network based on the first indication information.

Specifically, the first UE determines, based on whether the second paging message carries the identifier of the first UE, whether the first UE is paged, and determines, based on the first indication information, that the first base station indicates the first UE to fall back to the second access network to perform the voice service. Therefore, the first UE may select the target cell in the second access network based on a condition such as a cell measurement result, and initiate an RRC connection establishment procedure to a base station (that is, the target base station, referred to as a second base station in this application) to which the target cell belongs. It can be learned that there is no need for the first UE to access the first base station and then to be handed over or redirected from the first base station to the target base station, thereby reducing a delay of performing the voice service.

S505: The first UE accesses the target cell.

Specifically, the first UE sends an RRC connection establishment request message to the second base station. Optionally, the RRC connection establishment request message includes second indication information, and the second indication information indicates that an RRC connection is established based on the voice service. A function of the second indication information is similar to that of the indication information in the RRC connection establishment/resume request message in the embodiments shown in FIG. 3 and FIG. 4. Details are not described again.

Optionally, an access stratum of the first UE ignores an RRC connection establishment cause value provided by a non-access stratum. For detailed descriptions, refer to the embodiment shown in FIG. 3, for example, related content in step S304.

Optionally, in an implementation, if the first UE cannot select a proper target cell or the first UE fails to access the target cell, the first UE may send an RRC connection resume request (RRC connection resume request) to the first base station, where the RRC connection resume request message includes the voice service indication information. In this case, the first base station may process the first UE based on the RRC connection resume request, for example, determine another target cell in the second access network for the first UE for access.

Optionally, in an implementation, the method further includes: The first base station sends information about a candidate frequency or cell to the first UE, where the candidate frequency or cell is a frequency or cell in the second access network, and the candidate frequency or cell may belong to a same candidate target base station, or may belong to different candidate target base stations. The first UE may select a finally accessed target cell from the candidate frequency or cell.

Optionally, the information about the candidate frequency or cell may be included in system information broadcast by the first base station. Optionally, when the first base station switches the first UE from a connected state to a third state, an RRC release message sent by the first base station to the first UE may include the information about the candidate frequency or cell.

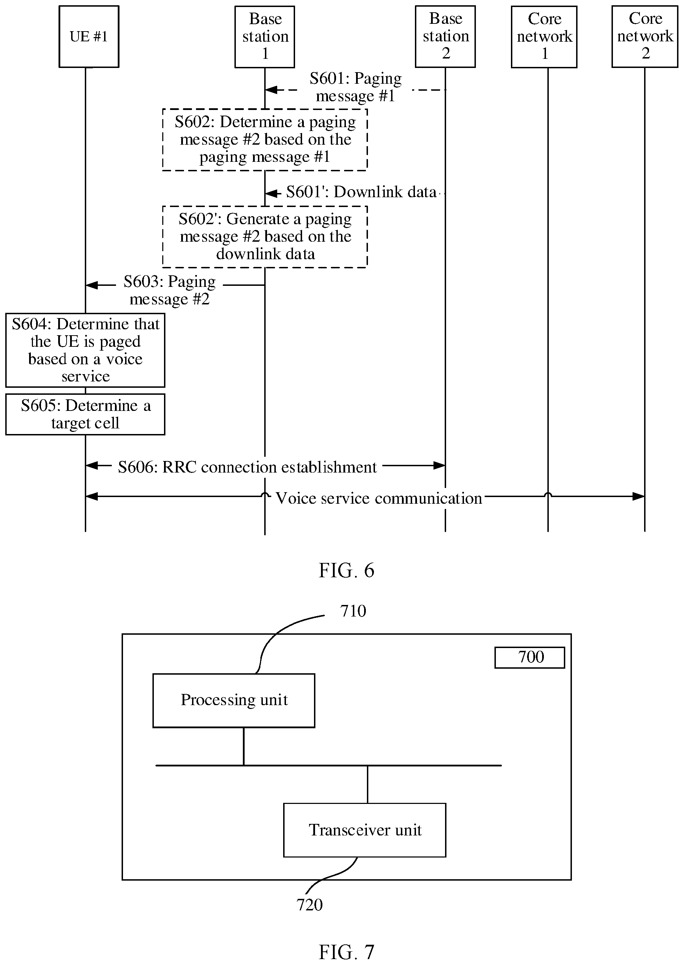

In the embodiment shown in FIG. 6, the communication method provided in this application is further described based on the embodiment shown in FIG. 5. Content described in the foregoing embodiment is not described again. In the embodiment shown in FIG. 6, the first base station is a base station 1, the second base station is a base station 2, and the first UE is UE #1. When the embodiment shown in FIG. 6 is applied to the application scenario shown in FIG. 1, the base station 1 is an NR base station, the core network 1 is a 5GC, the base station 2 is an LTE base station, and the core network 2 is an EPC. As shown in FIG. 6, the method includes the following steps.

S601: The core network 1 sends a paging message #1 to the base station 1.

The paging message #1 includes identifiers of one or more UEs, and identifiers of some or all UEs respectively correspond to voice service indication information. For example, an identifier of the UE #1 corresponds to voice service indication information, and the voice service indication information indicates that a reason why the UE #1 is paged is that a voice service arrives.

S602: The base station 1 determines a paging message #2 based on the paging message #1. The paging message #2 includes identifiers of one or more UEs and voice service indication information corresponding to identifiers of some or all UEs.

For descriptions of the paging message #1 and the paging message #2, refer to the descriptions of the first paging message and the second paging message in the embodiment in FIG. 5. When paged UE, for example, the UE #1, is in a third state, in another implementation, S601 and S602 may be replaced with S601' and S602'.

S601': The core network 1 sends, to the base station 1, downlink data transmitted to the UE #1.

S602': The base station 1 determines that the downlink data is related to a voice service, and generates a paging message #2.

For detailed descriptions of S601 and S602 and S601' and S602', refer to related content in the embodiments in FIG. 3 and FIG. 4.

S603: The base station 1 sends the paging message #2 to the one or more UEs.

It is assumed that the UE #1 in an idle state receives the paging message #2.

S604: The UE #1 determines, based on the paging message #2, that the UE #1 is paged based on the voice service.

S605: The UE #1 determines a target cell, where the target cell is managed by the base station 2.

S606: The UE #1 and the base station 2 complete an RRC connection establishment process.

Optionally, that the UE #1 and the base station 2 complete an RRC connection establishment process includes: The UE #1 sends an RRC connection establishment request message to the base station 2. Optionally, the RRC connection establishment request message includes an RRC connection establishment cause value indicating the voice service.

After accessing the base station 2, the UE #1 may perform voice service communication with the core network 2 via the base station 2.

According to the communication methods shown in FIG. 5 and FIG. 6 in this application, after receiving, from a currently camped base station, a paging message including the voice service indication information, the UE can learn that the camped base station indicates the UE to access a target access network that supports the UE to perform the voice service. Therefore, the UE can directly initiate an access process to a base station in the target access network without accessing the camped base station or registering with the core network connected to the camped base station, so that the UE can perform the voice service in the target access network in time, thereby reducing a delay of performing the voice service by the UE, and improving communication quality.

An embodiment of this application further provides a communication apparatus configured to implement any one of the foregoing methods. For example, the communication apparatus includes units (or means) configured to implement steps performed by the terminal or the access network device in any one of the foregoing methods. For example, FIG. 7 is a diagram of a communication apparatus according to an embodiment of this application. The communication apparatus may be a module used in a terminal or an access network device, for example, a chip; or the communication apparatus is a terminal or an access network device. As shown in FIG. 7, the communication apparatus 700 includes a processing unit 710 and a transceiver unit 720.

In an implementation, when the communication apparatus is used in the access network device, the access network device may be used as a camped base station of a terminal in a non-connected state. The processing unit 710 is configured to obtain voice service indication information. The transceiver unit 720 is configured to: send a first paging message to a first terminal, where the first paging message includes the voice service indication information, and the access network device is located in a first access network using a first radio access technology; and receive a request message from the first terminal, where the request message is used to request to establish or resume an RRC connection, the request message includes indication information, and the indication information indicates that the RRC connection is established or resumed based on a voice service. The processing unit 710 is further configured to determine, based on the indication information, to enable the first terminal to access a second access network using a second radio access technology, where the second access network supports the first terminal in performing the voice service.

Optionally, the first paging message further includes an identifier of one or more terminals, an identifier of the first terminal corresponds to the voice service indication information, and the first terminal belongs to the one or more terminals.

Optionally, the processing unit 710 is configured to determine, based on the indication information, to hand over or redirect the first terminal to a second access network device, where the second access network device is located in the second access network.

Optionally, the processing unit 710 is adapted to configure a measurement parameter for the first terminal based on the indication information, where the measurement parameter is used to measure a cell managed by one or more access network devices in the second access network.

Optionally, the processing unit 710 is configured to determine a target base station or a target cell in the second access network for the first terminal based on the indication information. The transceiver unit 720 is further configured to indicate the target base station or the target cell to the first terminal.

Optionally, the processing unit 710 receives a second paging message from a core network via the transceiver unit 720, where the second paging message includes the voice service indication information.

Optionally, the processing unit 710 receives, via the transceiver unit 720, downlink data transmitted to the first terminal or signaling related to the first terminal, where the downlink data or the signaling is related to the voice service; and determines the voice service indication information based on the downlink data or the signaling.

The core network and the access network device use a same radio access technology.

In an implementation, when the communication apparatus is used in the terminal, the transceiver unit 720 is configured to: receive a first paging message from a first access network device, where the first paging message includes voice service indication information, and the first access network device is located in a first access network using a first radio access technology; and send a request message to the first access network device, where the request message is used to request to establish or resume an RRC connection, the request message includes indication information, and the indication information indicates that the RRC connection is established or resumed based on a voice service.

Optionally, the processing unit 710 is configured to perform a function of an access stratum of the terminal, and the processing unit 710 ignores an RRC connection establishment cause value or an RRC connection resume cause value provided by a non-access stratum of the terminal.

Optionally, the transceiver unit 720 is configured to receive a measurement parameter from the first access network device, where the measurement parameter is used to measure a cell managed by one or more access network devices in a second access network.

Optionally, the transceiver unit 720 is configured to receive, from the first access network device, indication information indicating a target base station or a target cell located in the second access network.

For more detailed descriptions of functions performed by the units of the communication apparatuses on the access network device side and the terminal side in the foregoing implementations, refer to the descriptions of the steps performed by the first base station or the first UE in the method embodiments in FIG. 3 and FIG. 4.

In an implementation, when the communication apparatus is used in the access network device, the processing unit 710 is configured to determine a first paging message, where the first paging message includes first indication information, and the first indication information indicates a first terminal to access a second access network; and the transceiver unit 720 is configured to send the first paging message to the first terminal, where the first paging message is used by the first terminal to determine to access a target cell in the second access network, where the access network device is located in a first access network using a first radio access technology, the second access network uses a second radio access technology, and the second access network supports the first terminal in performing a voice service.

Optionally, the processing unit 710 is configured to: receive a second paging message from a core network via the transceiver unit 720, where the second paging message includes voice service indication information; and determine the first paging message based on the second paging message, where the core network and the access network device use a same radio access technology.

Optionally, the processing unit 710 is configured to: receive downlink data or signaling from a core network via the transceiver unit 720, where the downlink data is transmitted to the first terminal, the signaling is related to the first terminal, and the downlink data or the signaling is related to the voice service; and determine the first paging message based on the downlink data or the signaling.

Optionally, the transceiver unit 720 is further configured to send information about a candidate frequency or information about a candidate cell to the first terminal.

Optionally, the first indication information is the voice service indication information, or the first paging message further includes the voice service indication information.

In an implementation, when the communication apparatus is used in the terminal, the transceiver unit 720 is configured to receive a first paging message from a first access network device, where the first paging message includes first indication information, and the first indication information indicates the first terminal to access a second access network; and the processing unit 710 is configured to determine a target cell in the second access network based on the first indication information; and access the target cell in the second access network, where the first access network device is located in a first access network using a first radio access technology, the second access network uses a second radio access technology, and the second access network supports the terminal in performing a voice service.

Optionally, the processing unit 710 sends, via the transceiver unit 720, an RRC connection establishment request message to a second access network device to which the target cell belongs. Optionally, the RRC connection establishment request message includes second indication information, and the second indication information indicates that an RRC connection is established based on the voice service.

Optionally, the transceiver unit 720 is configured to receive information about a candidate frequency or information about a candidate cell from the first access network device.

For more detailed descriptions of functions performed by the units of the communication apparatuses on the access network device side and the terminal side in the foregoing implementations, refer to the descriptions of the steps performed by the first base station or the first UE in the method embodiments in FIG. 5 and FIG. 6.

It should be understood that division into units in the apparatus is merely logical function division. In an actual implementation, all or some of the units may be integrated into one physical entity or may be physically separated. For example, the transceiver unit 720 may be divided into a receiving unit and a sending unit. When the communication apparatus 700 is a communication apparatus on an access network side, the transceiver unit 720 may be further divided into a first transceiver unit communicating with the terminal and a second transceiver unit communicating with another network device such as a base station or a core network device.

All the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of these units may be integrated, or may be implemented independently. The processing element herein may also be referred to as a processor, and may be an integrated circuit having a signal processing capability. In an implementation process, steps in the foregoing methods or the foregoing units may be implemented by using a hardware integrated logic circuit in a processor element, or may be implemented in a form of software invoked by the processing element.

In an example, a unit in any one of the foregoing apparatuses may be one or more integrated circuits configured to implement the foregoing method, for example, one or more application-specific integrated circuits (Application-Specific Integrated Circuit, ASIC), one or more microprocessors (digital signal processor, DSP), or one or more field programmable gate arrays (Field Programmable Gate Array, FPGA), or a combination of at least two of these integrated circuit forms. For another example, when the units in the apparatus may be implemented in a form of scheduling a program by a processing element, the processing element may be a general-purpose processor, for example, a central processing unit (Central Processing Unit, CPU) or another processor that can invoke the program. For another example, the units may be integrated together and implemented in a form of a system-on-a-chip (system-on-a-chip, SoC).

The foregoing unit for receiving (for example, a communication unit) is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit for sending (for example, a sending unit or a communication unit) is an interface circuit of the apparatus, and is configured to send a signal to another apparatus. For example, when the apparatus is implemented in a manner of a chip, the sending unit is an interface circuit that is of the chip and that is configured to send a signal to another chip or apparatus.

In another implementation, the communication apparatus provided in this embodiment of this application may include at least one processing element and an interface circuit. The at least one processing element is configured to perform any communication method provided in the foregoing method embodiments. The processing element may perform, in a first manner, that is, by invoking a program stored in a storage element, some or all of the steps performed by the terminal or the network device; or may perform, in a second manner, that is, by using a hardware integrated logic circuit in a processor element in combination with instructions, some or all of the steps performed by the terminal or the network device; or may certainly perform, by combining the first manner and the second manner, some or all of the steps performed by the terminal or the network device. It may be understood that the interface circuit may be a transceiver or an input/output interface. Optionally, the communication apparatus may further include a memory, configured to: store instructions executed by the foregoing processing element, or store input data required by the processing element to run instructions, or store data generated after the processing element runs instructions.

As described above, the processing element herein may be a general-purpose processor, for example, a CPU, or may be one or more integrated circuits configured to implement the foregoing methods, for example, one or more ASICs, one or more microprocessors DSPs, one or more FPGAs, or a combination of at least two of the integrated circuits. The storage element may be one memory, or may be a general term of a plurality of storage elements.

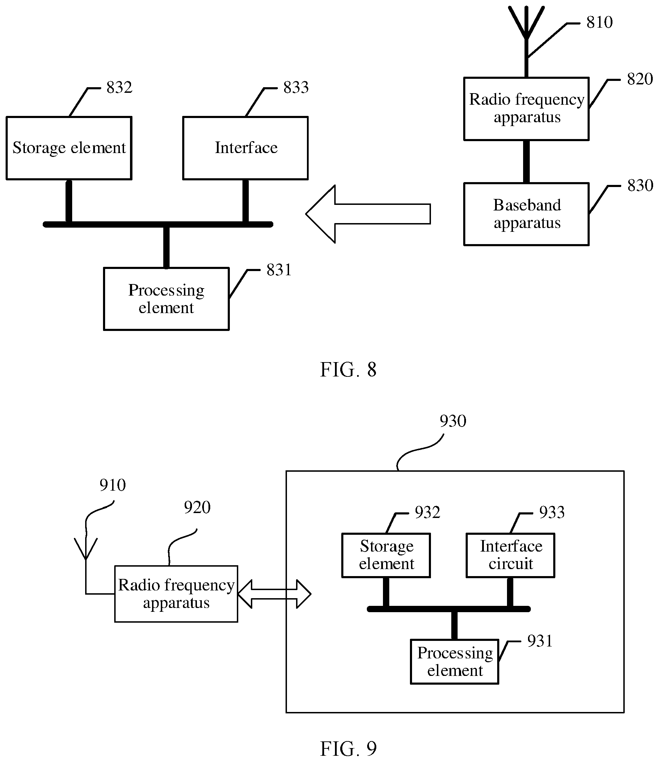

FIG. 8 is a diagram of a structure of a network device according to an embodiment of this application. The network device may be an access network device such as a base station, and is configured to perform the communication method provided in the foregoing method embodiment. As shown in FIG. 8, the network device includes an antenna 88, a radio frequency apparatus 820, and a baseband apparatus 830. The antenna 88 is connected to the radio frequency apparatus 820. In an uplink direction, the radio frequency apparatus 820 receives, via the antenna 88, information sent by a terminal, and sends, to the baseband apparatus 830 for processing, the information sent by the terminal. In a downlink direction, the baseband apparatus 830 processes information of the terminal, and sends the processed information to the radio frequency apparatus 820. The radio frequency apparatus 820 processes the information of the terminal, and then sends the processed information to the terminal via the antenna 88.

The baseband apparatus 830 may include one or more processing elements 831, for example, include a main control CPU and another integrated circuit. In addition, the baseband apparatus 830 may further include a storage element 832 and an interface 833. The storage element 832 is configured to store a program and data. The interface 833 is configured to exchange information with the radio frequency apparatus 820. The interface is, for example, a common public radio interface (common public radio interface, CPRI). The foregoing apparatus used in the network device may be located in the baseband apparatus 830. For example, the foregoing apparatus used in the network device may be a chip on the baseband apparatus 830. The chip includes at least one processing element and an interface circuit. The processing element is configured to perform steps performed by the first base station or the second base station in any communication method provided in the foregoing method embodiments. The interface circuit is configured to communicate with another apparatus. In an implementation, the units that implement the steps in the foregoing methods in the network device may be implemented in a form of scheduling a program by a processing element. For example, the apparatus used in the network device includes a processing element and a storage element, and the processing element invokes the program stored in the storage element, to perform the communication method provided in any one of the foregoing method embodiments. The storage element may be a storage element on a same chip as the processing element, that is, an on-chip storage element, or may be a storage element on a different chip from the processing element, that is, an off-chip storage element.

FIG. 9 is a diagram of a structure of a terminal according to an embodiment of this application. The terminal is configured to implement the communication method provided in the foregoing method embodiment. As shown in FIG. 9, the terminal includes an antenna 910, a radio frequency part 920, and a signal processing part 930. The antenna 910 is connected to the radio frequency part 920. In a downlink direction, the radio frequency part 920 receives, via the antenna 910, information sent by a network device, and sends, to the signal processing part 930 for processing, the information sent by the network device. In an uplink direction, the signal processing part 930 processes information of the terminal, and sends the processed information to the radio frequency part 920. The radio frequency part 920 processes the information of the terminal, and then sends the processed information to the network device via the antenna 910.

The signal processing part 930 is configured to process each communication protocol layer of data. The signal processing part 930 may be a subsystem of the terminal. In this case, the terminal may further include another subsystem, for example, a central processing subsystem, configured to process an operating system and an application layer of the terminal. For another example, a peripheral subsystem is configured to be connected to another device. The signal processing part 930 may be a separately disposed chip. Optionally, the foregoing apparatus may be located in the signal processing part 930.

The signal processing part 930 may include one or more processing elements 931, for example, include a main control CPU and another integrated circuit. In addition, the signal processing part 930 may further include a storage element 932 and an interface circuit 933. The storage element 932 is configured to store data and a program. The program used to perform the foregoing methods performed by the terminal in the methods may be stored or may not be stored in the storage element 932, for example, stored in a memory outside the signal processing part 930. During use, the signal processing part 930 loads the program into a cache for use. The interface circuit 933 is configured to communicate with an apparatus. The foregoing apparatus may be located in the signal processing part 930. The signal processing part 930 may be implemented by using a chip. The chip includes at least one processing element and an interface circuit. The processing element is configured to perform steps performed by the terminal in any communication method provided in the foregoing method embodiments. The interface circuit is configured to communicate with another apparatus. In an implementation, the units that implement the steps in the foregoing methods may be implemented in a form of scheduling a program by a processing element. For example, the apparatus includes a processing element and a storage element, and the processing element invokes the program stored in the storage element, to perform any communication method provided in the foregoing method embodiments. The storage element may be a storage element on a same chip as the processing element, that is, an on-chip storage element.

In another implementation, the program used to perform the foregoing methods performed by the terminal or the network device may be in a storage element on a different chip from the processing element, that is, an off-chip storage element. In this case, the processing element invokes a program from the off-chip storage element or loads a program to the on-chip storage element, to invoke and perform any communication method in the foregoing method embodiments.

In still another implementation, the units that implement the steps in the foregoing methods in the terminal or the network device may be configured as one or more processing elements. The processing element herein may be an integrated circuit, for example, one or more ASICs, one or more DSPs, one or more FPGAs, or a combination of these types of integrated circuits. These integrated circuits may be integrated together to form a chip.

The units that implement the steps in the foregoing methods may be integrated together and implemented in a form of a system-on-a-chip (system-on-a-chip, SoC). The SoC chip is configured to implement the foregoing methods. At least one processing element and a storage element may be integrated into the chip, and the processing element invokes a program stored in the storage element to implement the foregoing methods performed by the terminal or the network device. Alternatively, at least one integrated circuit may be integrated into the chip, to implement the foregoing methods performed by the terminal or the network device. Alternatively, with reference to the foregoing implementations, functions of some units may be implemented by invoking a program by the processing element, and functions of some units may be implemented by the integrated circuit.

An embodiment of this application further provides a communication system, including a first access network device and a second access network device. The first access network device may perform steps performed by the first base station in any communication method provided in the foregoing method embodiments, and the second access network device may perform steps performed by the second base station in any communication method provided in the foregoing method embodiments.

A person of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes any medium that can store program code, such as a ROM, a RAM, a magnetic disk, or an optical disc.

It should be understood that the term "and/or" in this specification describes only an association relationship between associated objects and represents that three relationships may exist. For example, A and/or B may represent the following three cases: Only A exists, both A and B exist, and only B exists.

It should be understood that, in embodiments of the present invention, "B corresponding to A" indicates that B is associated with A, and B may be determined based on A. However, it should be further understood that determining B based on A does not mean that B is determined based only on A. B may alternatively be determined based on A and/or other information.

"A plurality of in embodiments of this application refers to "two or more".

Descriptions such as "first" and "second" in embodiments of this application are merely used for illustration and distinguishing between described objects, are not sequenced, do not represent a special limitation on a quantity of described objects in embodiments of this application, and do not constitute any limitation on embodiments of this application.

Unless otherwise specified, "transmit/transmission" (transmit/transmission) in embodiments of this application refers to bidirectional transmission, and includes a sending action and/or a receiving action. Specifically, "transmit/transmission" in embodiments of this application includes data sending, data receiving, or data sending and data receiving. That is, data transmission herein includes uplink data transmission and/or downlink data transmission. Data may include information and/or a signal. Uplink data transmission is uplink information transmission and/or uplink signal transmission, and downlink data transmission is downlink information transmission and/or downlink signal transmission.

Mutual reference may be made to content in embodiments of this application. Unless otherwise specified or a logical conflict occurs, terms and/or descriptions in different embodiments are consistent and may be referenced by each other. Technical features in different embodiments may be combined to form a new embodiment based on an internal logical relationship thereof.

It may be understood that in embodiments of this application, the terminal and/or the network device may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be performed.

## Claims

1. A communication method, comprising:
obtaining, by a first access network device, voice service indication information;
sending, by the first access network device, a first paging message to a first terminal, wherein the first paging message comprises the voice service indication information, and the first access network device is located in a first access network using a first radio access technology;
receiving, by the first access network device, a request message from the first terminal, wherein the request message is used to request to establish or resume a radio resource control RRC connection, the request message comprises indication information, and the indication information indicates that the RRC connection is established or resumed based on a voice service; and
determining, by the first access network device based on the indication information, to enable the first terminal to access a second access network using a second radio access technology, wherein the second access network supports the first terminal in performing the voice service.

2. The method according to claim 1, wherein the determining, by the first access network device based on the indication information, to enable the first terminal to access a second access network using a second radio access technology comprises:
determining, by the first access network device based on the indication information, to hand over or redirect the first terminal to a second access network device, wherein the second access network device is located in the second access network.

3. The method according to claim 1 or 2, wherein the determining, by the first access network device based on the indication information, to enable the first terminal to access a second access network using a second radio access technology comprises:
configuring, by the first access network device, a measurement parameter for the first terminal based on the indication information, wherein the measurement parameter is used to measure a cell managed by one or more access network devices in the second access network.

4. The method according to any one of claims 1 to 3, wherein the obtaining, by a first access network device, voice service indication information comprises:
receiving, by the first access network device, a second paging message from a core network, wherein the second paging message comprises the voice service indication information, and the core network and the first access network device use a same radio access technology.

5. The method according to any one of claims 1 to 3, wherein the obtaining, by a first access network device, voice service indication information comprises:
receiving, by the first access network device from a core network, downlink data transmitted to the first terminal or signaling related to the first terminal, wherein the downlink data or the signaling is related to the voice service; and
determining, by the first access network device, the voice service indication information based on the downlink data or the signaling, wherein the core network and the first access network device use a same radio access technology.

6. The method according to claim 5, wherein the method further comprises:
sending, by the first access network device, a second paging message to a neighboring access network device, wherein the second paging message comprises the voice service indication information.

7. The method according to any one of claims 1 to 6, wherein
the first access network is a new radio NR network, and the second access network is a long term evolution LTE network.

8. The method according to claim 4, wherein the core network is a 5G core network.

9. The method according to any one of claims 1 to 8, wherein
the first paging message further comprises an identifier of one or more terminals, an identifier of the first terminal corresponds to the voice service indication information, and the first terminal belongs to the one or more terminals.

10. The method according to any one of claims 1 to 9, wherein the first terminal is in a third state.

11. A communication method, comprising:
receiving, by a first terminal, a first paging message from a first access network device, wherein the first paging message comprises voice service indication information, and the first access network device is located in a first access network using a first radio access technology; and
sending, by the first terminal, a request message to the first access network device, wherein the request message is used to request to establish or resume a radio resource control RRC connection, the request message comprises indication information, and the indication information indicates that the RRC connection is established or resumed based on a voice service.

12. The method according to claim 11, wherein the voice service indication information is determined based on a second paging message received by the first access network device from a core network, the second paging message comprises the voice service indication information, and the core network and the first access network device use a same radio access technology.

13. The method according to claim 11, wherein the voice service indication information is determined based on downlink data or signaling related to the first terminal that is received by the first access network device from a core network, the downlink data is transmitted to the first terminal, the downlink data or the signaling is related to the voice service, and the core network and the first access network device use a same radio access technology.

14. The method according to any one of claims 11 to 13, wherein the method further comprises:
ignoring, by an access stratum of the first terminal, an RRC connection establishment cause value or an RRC connection resume cause value provided by a non-access stratum of the terminal, and using the indication information as the RRC connection establishment cause value or the RRC connection resume cause value.

15. The method according to any one of claims 11 to 14, wherein the method further comprises:
receiving, by the first terminal, a measurement parameter from the first access network device, wherein the measurement parameter is used to measure a cell managed by one or more access network devices in a second access network.

16. The method according to any one of claims 11 to 15, wherein the method further comprises:
receiving, by the first terminal from the first access network device, indication information indicating a target base station or a target cell located in the second access network, wherein the second access network uses a second radio access technology and supports the first terminal in performing the voice service.

17. The method according to any one of claims 11 to 16, wherein the first paging message further comprises an identifier of one or more terminals, an identifier of the first terminal corresponds to the voice service indication information, and the first terminal belongs to the one or more terminals.

18. The method according to any one of claims 11 to 17, wherein the first access network is a new radio NR network, and the second access network is a long term evolution LTE network.

19. A communication method, comprising:
receiving, by a first terminal, a first paging message from a first access network device, wherein the first paging message comprises first indication information, and the first indication information indicates the first terminal to access a second access network;
determining, by the first terminal, a target cell in the second access network based on the first indication information; and
accessing, by the first terminal, the target cell, wherein
the first access network device is located in a first access network using a first radio access technology, the second access network uses a second radio access technology, and the second access network supports the first terminal in performing a voice service.

20. The method according to claim 19, wherein the first indication information is determined based on a second paging message received by the first access network device from a core network, the second paging message comprises voice service indication information, and the core network and the first access network device use a same radio access technology.

21. The method according to claim 19, wherein the first indication information is determined based on downlink data or signaling received by the first access network device from a core network, the downlink data is transmitted to the first terminal, the signaling is related to the first terminal, the downlink data or the signaling is related to the voice service, and the core network and the first access network device use a same radio access technology.

22. The method according to any one of claims 19 to 21, wherein the accessing, by the first terminal, the target cell in the second access network comprises:
sending, by the first terminal, a radio resource control RRC connection establishment request message to a second access network device to which the target cell belongs.

23. The method according to claim 22, wherein the RRC connection establishment request message comprises second indication information, and the second indication information indicates that an RRC connection is established based on the voice service.

24. The method according to any one of claims 21 to 23, wherein the method further comprises:
ignoring, by an access stratum of the first terminal, an RRC connection establishment cause value provided by a non-access stratum of the first terminal.

25. The method according to any one of claims 19 to 24, wherein the first indication information is the voice service indication information, and the method further comprises:
receiving, by the first terminal, third indication information from the first access network device, wherein the third indication information indicates that the first access network device does not support the voice service; and
determining, by the first terminal, the target cell in the second access network based on the first indication information and the third indication information.

26. The method according to any one of claims 19 to 25, wherein the method further comprises:
receiving information about a candidate frequency or information about a candidate cell from the first access network device.

27. The method according to any one of claims 19 to 26, wherein
the first access network is a new radio NR network, and the second access network is a long term evolution LTE network.

28. The method according to any one of claims 19 to 27, wherein
the first paging message further comprises an identifier of one or more terminals, an identifier of the first terminal corresponds to the voice service indication information, and the first terminal belongs to the one or more terminals.

29. The method according to any one of claims 19 to 28, wherein the first terminal is in a third state.

30. A communication method, comprising:
determining, by a first access network device, a first paging message, wherein the first paging message comprises first indication information, and the first indication information indicates a first terminal to access a second access network; and
sending, by the first access network device, the first paging message to the first terminal, wherein the first paging message is used by the first terminal to determine to access a target cell in the second access network, wherein
the first access network device is located in a first access network using a first radio access technology, the second access network uses a second radio access technology, and the second access network supports the first terminal in performing a voice service.

31. The method according to claim 30, wherein the determining, by a first access network device, a first paging message comprises:
receiving, by the first access network device, a second paging message from a core network, wherein the second paging message comprises voice service indication information; and
determining, by the first access network device, the first paging message based on the second paging message, wherein the core network and the first access network device use a same radio access technology.

32. The method according to claim 30, wherein the determining, by a first access network device, a first paging message comprises:
receiving, by the first access network device from a core network, downlink data or signaling related to the first terminal, wherein the downlink data is transmitted to the first terminal, and the downlink data or the signaling is related to the voice service; and
determining, by the first access network device, the first paging message based on the downlink data or the signaling, wherein
the core network and the first access network device use a same radio access technology.

33. The method according to any one of claims 30 to 32, wherein the method further comprises:
sending, by the first access network device, information about a candidate frequency or information about a candidate cell to the first terminal.

34. The method according to any one of claims 30 to 33, wherein the method further comprises: sending, by the first access network device, third indication information to the first terminal, wherein the third indication information indicates that the first access network device does not support the voice service.

35. The method according to any one of claims 30 to 34, wherein the first indication information is the voice service indication information, or the first paging message further comprises the voice service indication information.

36. The method according to any one of claims 30 to 35, wherein the first paging message further comprises an identifier of one or more terminals, an identifier of the first terminal corresponds to the voice service indication information, and the first terminal belongs to the one or more terminals.

37. The method according to any one of claims 30 to 36, wherein the first access network is a new radio NR network, and the second access network is a long term evolution LTE network.

38. A communication apparatus, comprising a unit or a module configured to perform the method according to any one of claims 1 to 10 or the method according to any one of claims 30 to 37.

39. A communication apparatus, comprising a unit or a module configured to perform the method according to any one of claims 11 to 29.

40. A communication apparatus, comprising a processor, wherein the processor is configured to perform the method according to any one of claims 1 to 10 or the method according to any one of claims 30 to 37.

41. A communication apparatus, comprising a processor, wherein the processor is configured to perform the method according to any one of claims 11 to 29.

42. A computer-readable storage medium, wherein the computer-readable storage medium stores a computer program, and when the computer program is run by a communication apparatus, the communication apparatus is enabled to perform the method according to any one of claims 1 to 37.

43. A computer program product, wherein when the computer program product is run by a communication apparatus, the communication apparatus is enabled to perform the method according to any one of claims 1 to 37.

44. A communication system, comprising a first access network device and a second access network device, wherein the first access network device is configured to perform the method according to any one of claims 1 to 10.

45. The communication system according to claim 44, further comprising a terminal device, wherein the terminal device is configured to perform the method according to any one of claims 11 to 18.

46. A communication system, comprising a first access network device and a second access network device, wherein the first access network device is configured to perform the method according to any one of claims 30 to 37.

47. The communication system according to claim 46, further comprising a terminal device, wherein the terminal device is configured to perform the method according to any one of claims 19 to 29.
